# EUROPÄISCHE PATENTSCHRIFT

(11) **EP 3 100 122 B1**
(45) Veröffentlichungstag und Bekanntmachung des Hinweises auf die Patenterteilung: **19.09.2018**
(21) Anmeldenummer: 15710123.9
(22) Anmeldetag: 27.02.2015
(51) Int. Cl.: G05B 19/042, G05B 23/02

(54) **VERFAHREN ZUM BEREITSTELLEN VON ZUVERLÄSSIGEN SENSORDATEN**
METHOD FOR MAKING RELIABLE SENSOR DATA AVAILABLE
PROCÉDÉ DE PRODUCTION DE DONNÉES DE DÉTECTION FIABLES

(30) Priorität: 29.04.2014 DE 102014208034
(43) Veröffentlichungstag der Anmeldung: 07.12.2016
(73) Patentinhaber: Siemens Aktiengesellschaft, 80333 München (DE)
(72) Erfinder: HUBAUER, Thomas, 85748 Garching (DE); LAMPARTER, Steffen, 85622 Feldkirchen (DE); ROSHCHIN, Mikhail, 81925 München (DE); SOLOMAKHINA, Nina, 85521 Riemerling (DE); WATSON, Stuart, Newark Nottinghamshire NG24 4QN (GB)
(86) Internationale Anmeldenummer: PCT/EP2015/054121
(87) Internationale Veröffentlichungsnummer: WO 2015/165611

(56) Entgegenhaltungen:
- WO-A1-2005/080164
- DE-A1-102010 043 651
- FR-A1- 2 987 533
- US-A- 5 661 668
- US-A1- 2005 289 230
- US-A1- 2012 135 757

## Beschreibung

Moderne industrielle Systeme weisen eine zunehmende Komplexität auf. Um Betriebszustände und mögliche Fehler in einem derartigen System zu erkennen, ist es notwendig, Daten automatisch zu verarbeiten. Industrielle Anlagen können eine Vielzahl von Sensoreinheiten enthalten, die unterschiedliche Parameter überwachen, beispielsweise Temperatur, Bewegung, Vibration, Druck und dergleichen. Sensoreinheiten stellen zudem selbst komplexe technische Einrichtungen dar, d.h., die Sensoreinheiten können ihrerseits ausfallen und/oder die von Ihnen gelieferten Sensordaten können unzuverlässig bzw. fehlerhaft sein. Potenziell fehlerhafte Daten umfassen Werte bzw. Sensorwerte, die sich innerhalb eines definierten Bereichs befinden, jedoch von vorausgehenden und/oder nachfolgenden Werten stark abweichen. Weitere möglicherweise fehlerhafte Daten umfassen Sensorwerte, die außerhalb eines definierten Bereichs liegen und die insbesondere vorgegebene Schwellenwerte überschreiten bzw. unterschreiten. Weitere mögliche fehlerhafte Daten umfassen erkennbar fehlende Daten oder nicht erkennbar fehlende Daten, die durch Rauschen überlagert sind, sowie oszillierende bzw. schwankende Datenwerte.

Derartige Daten niedriger Qualität erschweren es, den System- und Prozessstatus des Systems einzuschätzen und das Systemverhalten zu steuern bzw. zu regeln. Hierdurch wird die Zuverlässigkeit des Systems beeinträchtigt und Analyseergebnisse zumindest teilweise entwertet.

Die US 5 661 668 A zeigt ein Verfahren zum Identifizieren einer Fehlerquelle in einem komplexen System. Die FR 2 987 533 A1 zeigt ein System, bei welchem Sensoren Fehlermeldungen erzeugen, aus denen eine Warnmeldung generiert wird. Die DE 10 2010 043 651 A1 zeigt ein System zum Überwachen von Anlagen, bei welchem ein Laufzeitsystem der Anlage erstellt wird.

Es ist eine Aufgabe der vorliegenden Erfindung, ein Verfahren und eine Vorrichtung zur Erhöhung der Qualität von Sensordaten zu schaffen.

Diese Aufgabe wird erfindungsgemäß durch ein Verfahren mit den in Patentanspruch 1 angegebenen Merkmalen und ein System mit den in Patentanspruch 8 angegeben Merkmalen gelöst.

Bei einer möglichen Ausführungsform des erfindungsgemäßen Verfahrens weist die Ontologie eine Systemontologie des Systems und/oder eine Sensorontologie der Sensoreinheiten auf.

Bei einer weiteren möglichen Ausführungsform des erfindungsgemäßen Verfahrens werden auf Basis der Systemontologie und/oder der Sensorontologie des Systems verschiedene Sensoreinheiten zu einem Sensorcluster gruppiert.

Bei einer bevorzugten Ausführungsform des erfindungsgemäßen Verfahrens werden innerhalb des Systems benachbarte und/oder einander ähnliche Sensoreinheiten zu einem Sensorcluster gruppiert.

Bei einer weiteren möglichen Ausführungsform des erfindungsgemäßen Verfahrens werden Sensordaten, die von Sensoreinheiten des gleichen Sensorclusters empfangen werden, mittels des statistischen Datenanalysemodells zum Ermitteln von Korrelationen zwischen den Sensordaten der Sensoreinheiten des Sensorclusters ausgewertet.

Bei einer weiteren möglichen Ausführungsform des erfindungsgemäßen Verfahrens werden auf Basis der ermittelten Korrelationen zwischen Sensordaten der verschiedenen Sensoreinheiten des gleichen Sensorclusters unzuverlässige Sensoreinheiten innerhalb des Sensorclusters erkannt und deren Sensordaten zumindest teilweise herausgefiltert.

Bei einer weiteren möglichen Ausführungsform des erfindungsgemäßen Verfahrens liefern die Sensoreinheiten jeweils stationäre Zeitreihendaten.

Bei einer weiteren möglichen Ausführungsform des erfindungsgemäßen Verfahrens liefern die Sensoreinheiten jeweils nicht stationäre Zeitreihendaten.

Bei einer weiteren möglichen Ausführungsform des erfindungsgemäßen Verfahrens gibt die Systemontologie eine innere hierarchische Struktur der in dem System enthaltenen Systemkomponenten an.

Bei einer weiteren möglichen Ausführungsform des erfindungsgemäßen Verfahrens klassifiziert die Sensorontologie die Sensoreinheiten in verschiedene Sensorklassen.

Bei einer weiteren möglichen Ausführungsform des erfindungsgemäßen Verfahrens bilden die Sensoreinheiten selbst Systemkomponenten des Systems und/oder werden durch externe Sensoreinheiten gebildet, die Systemkomponenten des Systems überwachen.

Bei einer weiteren möglichen Ausführungsform des erfindungsgemäßen Verfahrens werden die von den Sensoreinheiten empfangenen Sensordaten zusätzlich unter Verwendung einer Diagnoseontologie zum Erzeugen der zuverlässigen Sensordaten verarbeitet.

Bei einer weiteren möglichen Ausführungsform des erfindungsgemäßen Verfahrens werden die Systemontologie des Systems, die Sensorontologie der Sensoreinheiten und die Diagnoseontologie zu einer integrierten Ontologie der Anwendung verknüpft.

Bei einer weiteren möglichen Ausführungsform des erfindungsgemäßen Verfahrens wird das statistische Datenanalysemodell durch ein univariates Datenanalysemodell gebildet.

Bei einer alternativen Ausführungsform des erfindungsgemäßen Verfahrens wird das statistische Datenanalysemodell durch ein multivariates Datenanalysemodell gebildet.

Bei einer möglichen Ausführungsform des erfindungsgemäßen Systems ist das System eine Maschine mit einer Vielzahl von Maschinenkomponenten.

Bei einer möglichen Ausführungsform des erfindungsgemäßen Systems handelt es sich bei dem System um eine Turbine, insbesondere eine Gasturbine, mit einer Vielzahl von Maschinenkomponenten.

Die Erfindung schafft ferner eine Datenverarbeitungseinheit zur Aufbereitung von Sensordaten mit den in Patentanspruch 15 angegebenen Merkmalen.

Die Erfindung schafft demnach eine Datenverarbeitungseinheit zur Aufbereitung von Sensordaten, welche von Sensoreinheiten stammen, die Systemkomponenten eines Systems, insbesondere einer Maschine, überwachen, wobei die Datenverarbeitungseinheit die empfangenen Sensordaten unter Verwendung mindestens einer gespeicherten Ontologie und eines statistischen Datenanalysemodells zur Erzeugung zuverlässiger Sensordaten verarbeitet.

Im Weiteren werden mögliche Ausführungsformen des erfindungsgemäßen Verfahrens und des erfindungsgemäßen Systems unter Bezugnahme auf die beigefügten Figuren näher erläutert.

Es zeigen:
- Fig. 1: ein Diagramm zur Erläuterung des erfindungsgemäßen Systems;
- Fig. 2: ein Ablaufdiagramm zur Darstellung eines Ausführungsbeispiels des erfindungsgemäßen Verfahrens zum Bereitstellen von zuverlässigen Sensordaten;
- Fig. 3: ein Anwendungsbeispiel zur Erläuterung des erfindungsgemäßen Verfahrens und des erfindungsgemäßen Systems;
- Fig. 4: ein Diagramm zur Darstellung einer exemplarischen Ontologie, wie sie bei dem in Fig. 3 dargestellten System verwendet werden kann; und
- Fig. 5: ein Diagramm zur Darstellung einer exemplarischen integrierten Ontologie, wie sie bei dem in Fig. 3 dargestellten System verwendet werden kann.

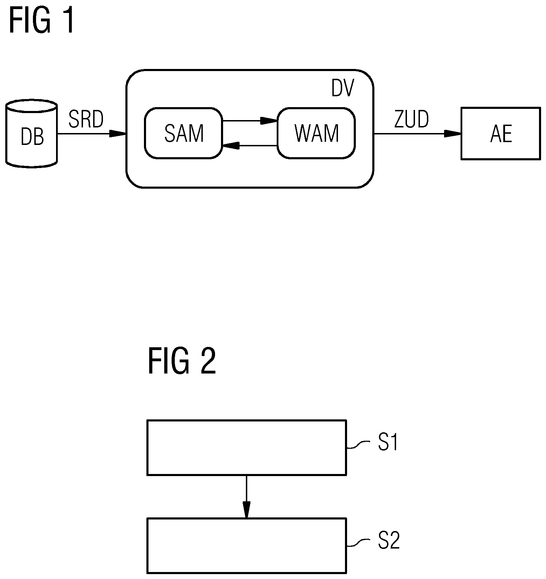

Fig. 1 zeigt schematisch das Zusammenwirken verschiedener Einheiten bei dem erfindungsgemäßen Verfahren zum Bereitstellen von zuverlässigen Sensordaten eines Systems, insbesondere eines industriellen Systems 1. Bei dem erfindungsgemäßen Ansatz werden statistische und wissensbasierte Verfahren kombiniert, um die Erfassung und Korrektur von Sensordaten zu verbessern. Die Sensordaten bilden eine Datenbasis DB, aus der Sensordaten, insbesondere Sensorrohdaten SRD, ausgelesen werden können. Eine Datenverarbeitungseinheit DV setzt statistische Analysekomponenten SAM und wissensbasierte Komponenten WAM ein, um aus den empfangenen Daten, insbesondere Sensordaten, zuverlässige Daten ZVD bzw. bereinigte Daten zu generieren, welche für weitere Analyse- und Diagnoseschritte in einer weiteren Analyseeinheit AE verwendet werden können. Fig. 1 zeigt ein statistisches Analysemodul SAM und ein wissensbasiertes Analysemodul WAM, die miteinander interagieren und sich gegenseitig unterstützen, um die Qualität der empfangenen Daten, insbesondere Sensordaten, zu erhöhen. Das statistische Analysemodul SAM und das wissensbasierte Analysemodul WAM unterstützen sich gegenseitig, um von dem anderen Modul erhaltene falsch positive Daten zu erkennen bzw. um von dem anderen Modul nicht erhaltene falsch negative Daten zu identifizieren. Das statistische Analysemodul SAM verwendet mindestens ein statistisches Datenanalysemodell. Das wissensbasierte Analysemodell WAM verwendet mindestens eine gespeicherte Ontologie ONT. Vorzugsweise verwendet das wissensbasierte Analysemodul WAM eine Systemontologie SYS-ONT des jeweiligen technischen Systems 1, beispielsweise eines Turbinensystems, und eine Sensorontologie SEN-ONT der Sensoreinheiten SE, welche die empfangenen Sensordaten liefern. Die Systemontologie SYS-ONT des industriellen Systems 1, welches eine Vielzahl von Sensoreinheiten SE aufweist, die jeweils eine oder mehrere Systemkomponenten SK des Systems überwachen, gibt vorzugsweise eine innere hierarchische Struktur der in dem System enthaltenen Systemkomponenten an. Die Sensoreinheiten SE, welche die Sensordaten liefern, sind bei einer möglichen Ausführungsform selbst Systemkomponenten des Systems. Alternativ können die Sensoreinheiten SE zumindest teilweise durch externe Sensoreinheiten gebildet werden, die Systemkomponenten des Systems überwachen. Die Sensoreinheiten SE können jeweils stationäre oder nicht stationäre Zeitreihendaten liefern, welche verarbeitet werden.

Bei einer möglichen Ausführungsform werden auf Basis der Systemontologie SYS-ONT des industriellen Systems 1 und/oder der Sensorontologie SEN-ONT der das industrielle System 1 überwachenden Sensoreinheiten verschiedene Sensoreinheiten zu einem Sensorcluster SC gruppiert. Bei einer möglichen Ausführungsform werden Sensoreinheiten, die innerhalb des industriellen Systems 1 benachbart liegen bzw. positioniert sind, zu einem Sensorcluster SC gruppiert. Bei einer weiteren möglichen Ausführungsform werden verschiedene Sensoreinheiten SE, welche die gleiche Systemkomponente des industriellen Systems 1 zumindest hinsichtlich eines zu überwachenden Parameters überwachen, zu einem Sensorcluster SC gruppiert. Bei einer weiteren möglichen Ausführungsform werden einander ähnliche Sensoreinheiten bzw. Sensoreinheiten des gleichen Typs zu einem Sensorcluster SC gruppiert. Bei einer möglichen Ausführungsform erfolgt die Gruppierung der Sensoreinheiten SE zu einem Sensorcluster SC anhand vorgegebener Gruppierungskriterien, die alternativ oder akkumulativ erfüllt sein müssen.

Sensordaten, die von Sensoreinheiten SE des gleichen SensorClusters SC empfangen werden, werden bei einer möglichen Ausführungsform mittels eines statistischen Datenanalysemodells zum Ermitteln von Korrelationen zwischen den Sensordaten der Sensoreinheiten des jeweiligen Sensorclusters SC ausgewertet. Auf Basis der ermittelten Korrelationen zwischen Sensordaten der verschiedenen Sensoreinheiten SE des gleichen SensorClusters SC werden unzuverlässige Sensoreinheiten SE innerhalb des Sensorclusters SC erkannt und deren Sensordaten, insbesondere Sensorrohdaten SRD, vorzugsweise zumindest teilweise herausgefiltert.

Bei einer möglichen Ausführungsform werden Informationen hinsichtlich der gemessenen Qualität und/oder des Montageortes der Sensoreinheiten SE verwendet, um automatisch diejenigen Sensoreinheiten zu identifizieren, die als Ersatz für andere Sensoreinheiten dienen können, d.h., es werden diejenigen Sensoreinheiten automatisch identifiziert, welche denselben Parameter bzw. dieselbe Messgröße oder eine davon ableitbare vergleichbare Messgröße überwachen bzw. entsprechende Sensordaten liefern und die sich in unmittelbarer Nähe der anderen Sensoreinheit innerhalb des industriellen Systems 1 befinden. Das statistische Analysemodul SAM kann Verfahren zur Zeitreihenanalyse bereitstellen, welche beispielsweise einen Trend oder periodisch auftretende bzw. saisonale Effekte der empfangenen Sensordaten erkennt bzw. identifiziert. Weiterhin kann das statistische Analysemodul SAM Verfahren zur Zeitreihendatenanalyse bereitstellen, die es erlauben, schwankende bzw. oszillierende Daten, Rauschen und/oder Lücken in den empfangenen Daten zu erkennen. Weiterhin kann das statistische Analysemodul SAM Verfahren bereitstellen, die eine Entwicklung der Korrelation von Sensordaten, die von Sensoreinheiten innerhalb des kopierten Sensorclusters geliefert werden, bestimmen.

Fig. 2 zeigt ein Ablaufdiagramm zur Darstellung eines Ausführungsbeispiels des erfindungsgemäßen Verfahrens zum Bereitstellen von zuverlässigen Sensordaten eines Systems 1, insbesondere eines industriellen Systems.

In einem ersten Schritt S1 werden Sensordaten von mindestens einer Sensoreinheit SE empfangen, wobei die Sensoreinheit eine oder ggf. mehrere Systemkomponenten des industriellen Systems 1 überwacht. Die Sensoreinheit bildet dabei entweder selbst eine Systemkomponente des Systems oder wird durch eine externe Sensoreinheit gebildet, die eine Systemkomponente SK des industriellen Systems 1 überwacht.

In einem weiteren Schritt S2 werden die empfangenen Sensordaten unter Verwendung mindestens einer gespeicherten Ontologie ONT und eines statistischen Datenanalysemodells zum Erzeugen der zuverlässigen Sensordaten verarbeitet. Die Verarbeitung der empfangenen Sensordaten bzw. Sensorrohdaten SRD erfolgt im Schritt S2 vorzugsweise in Echtzeit. Das im Schritt S2 verwendete statistische Datenanalysemodell wird durch ein univariates oder multivariates Datenanalysemodell gebildet. Im Schritt S2 können eine oder mehrere Ontologien verwendet werden. Vorzugsweise kann eine Ontologie SYS-ONT des industriellen Systems 1 und eine Ontologie SEN-ONT der verwendeten Sensoreinheiten SE im Schritt S2 verwendet werden. Auf Basis der Systemontologie SYS-ONT des industriellen Systems 1 sowie der Sensorontologie SEN-ONT der überwachenden Sensoreinheiten werden vorzugsweise verschiedene Sensoreinheiten zu unterschiedlichen Sensorclustern SC gruppiert. Sensordaten, die von Sensoreinheiten des gleichen Sensorclusters SC stammen, werden mittels des statistischen Datenanalysemodells SAM zur Ermittlung von Korrelationen zwischen den Sensordaten der Sensoreinheiten des jeweiligen Sensorclusters ausgewertet. Mithilfe der ermittelten Korrelationen ist es möglich, wahrscheinlich unzuverlässige Sensoreinheiten SE innerhalb des Sensorclusters SC zu erkennen und Sensordaten, die von derartigen möglicherweise als unzuverlässig eingestuften Sensoreinheiten SE stammen, zumindest teilweise herauszufiltern.

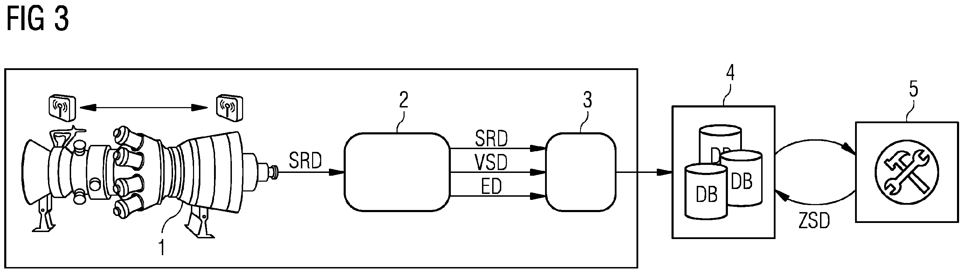

Fig. 3 zeigt ein Anwendungsbeispiel zur Erläuterung der Funktionsweise des erfindungsgemäßen Verfahrens und der erfindungsgemäßen Vorrichtung zum Bereitstellen von zuverlässigen Sensordaten eines industriellen Systems. Bei dem in Fig. 3 dargestellten Anwendungsbeispiel handelt es sich bei dem überwachten industriellen System 1 um eine Turbine, insbesondere eine Gasturbine. Eine derartige Turbine besteht aus einer Vielzahl von Systemkomponenten SK, die ihrerseits aus einer Vielzahl von Systemkomponenten bestehen können. Eine Gasturbine weist als Hauptbestandteile einen Kompressor, eine Brennkammer und einen Generator auf. Der Kompressor beschleunigt ein hineinströmendes Gas und erhöht dessen Druck durch Verminderung des Gasvolumens. In der Brennkammer wird das Gas bei einem konstanten Druck erhitzt. Der Generator generiert schließlich die Leistung aus dem ausströmenden heißen Gas. Die in Fig. 3 dargestellte Turbine 1 stellt ein industrielles System bzw. eine industrielle Anlage mit einer Vielzahl von Systemkomponenten dar. Viele der in dem System 1 enthaltenen Systemkomponenten werden durch Messeinrichtungen bzw. Sensoreinheiten SE überwacht. Dabei bilden die meisten Sensoreinheiten selbst Systemkomponenten des industriellen Systems 1. Eine Vielzahl von Sensoreinheiten liefern Sensorrohdaten SRD an eine Steuereinheit 2, bei der sogenannte Softsensoren definiert werden können. Diese Steuereinheit 2 kann bei einer möglichen Ausführungsform die Sensorrohdaten SRD an einen Datenkollektor 3 weiterleiten. Weiterhin kann die Steuereinheit 2 die empfangenen Sensorrohdaten SRD aufbereiten und an den Datenkollektor 3 die vorverarbeiteten Sensordaten VSD liefern. Weiterhin kann die Steuereinheit 2 die empfangenen Sensorrohdaten SRD aufbereiten und zumindest teilweise auswerten, um dem Datenkollektor 3 Ereignisse, die in dem industriellen System 1 aufgetreten sind, als Ereignisdaten ES zu melden. Der Datenkollektor 3 ist bei einer möglichen Ausführungsform über ein Datennetzwerk mit einer Datenzentrale 4 verbunden, welche über Datenbanken DB verfügt, in welche die empfangenen Daten, insbesondere weitergeleitete Sensorrohdaten SRD, eingeschrieben werden. Ein Servicecenter bzw. eine Datenverarbeitungseinheit 5 kann dann die in den Datenbanken DB der Datenzentrale 4 gespeicherten Daten auslesen und daraus zuverlässige Sensordaten ZSD berechnen, die in eine Datenbank DB der Datenzentrale 4 zurückgeschrieben werden.

Bei einer möglichen Ausführungsform wird das erfindungsgemäße Verfahren zum Bereitstellen von zuverlässigen Sensordaten des industriellen Systems 1 durch das in Fig. 3 dargestellte Servicecenter 5 durchgeführt. Alternativ kann das erfindungsgemäße Verfahren auch durch andere Einheiten, insbesondere Datenverarbeitungseinheiten, durchgeführt werden, die sich an anderer Stelle befinden, beispielsweise in der Steuereinheit 2 oder dem Datenkollektor 3. Bei zeitkritischen Daten, welche eine rasche Reaktion erfordern, erfolgt die Datenverarbeitung der Sensorrohdaten SRD möglichst nahe dem zu überwachenden industriellen System 1, um Zeitverzögerungen bei der Reaktion auf auffällige Sensordaten zu minimieren. Sind umgekehrt die empfangenen Sensorrohdaten SRD weniger zeitkritisch, kann die Datenverarbeitung bzw. Aufbereitung der Sensorrohdaten SRD zu zuverlässigen Sensordaten weiter entfernt erfolgen, beispielsweise durch eine Datenverarbeitungseinheit des Servicecenters 5. Die durch das erfindungsgemäße Verfahren gelieferten bereinigten bzw. zuverlässigeren Sensordaten ZSD können weiter verarbeitet werden, um Steuersignale als Reaktion auf die zuverlässigen Sensordaten zu generieren. Beispielsweise kann eine Sensoreinheit SE innerhalb eines Sensorclusters SC, die wahrscheinlich unzuverlässig arbeitet, durch Steuersignale gezielt abgeschaltet werden. Weiterhin kann beispielsweise von einer möglicherweise ausgefallenen Sensoreinheit auf eine Ersatzsensoreinheit umgeschaltet werden. Indem man die Sensordaten, welche von Ersatzsensoreinheiten und/oder benachbarten Sensoreinheiten geliefert werden, mitberücksichtigt, kann ein auffälliges anormales Verhalten einer Sensoreinheit SE erkannt werden. Hierbei ist es möglich zu unterscheiden, ob die auffälligen Sensordaten aufgrund eines Fehlverhaltens der überwachten Systemkomponente oder durch einen fehlerhaften Zustand der überwachenden Sensoreinheit hervorgerufen werden.

Die Sensoreinheiten können einen Parameter, beispielsweise eine Temperatur, Druck oder eine sonstige physikalische Größe mit einer bestimmten Frequenz bzw. Periode erfassen, wobei sie Zeitreihendaten liefern. Diese Zeitreihendaten können diskrete Zeitreihendaten oder kontinuierliche Zeitreihendaten bilden. Bei diskreten Zeitreihendaten werden Messbeobachtungen in bestimmten Zeitintervallen durchgeführt und bilden einen diskreten Datensatz. Bei kontinuierlichen Zeitreihen werden die Messbeobachtungen im Zeitverlauf kontinuierlich aufgezeichnet. Die Zeitreihen sind stationär, falls Parameter, wie beispielsweise ein Durchschnittswert oder eine Standardabweichung, sich über die Zeit nicht verändern und keinem Trend folgen. Weiterhin können die Zeitreihendaten auch nicht stationär sein.

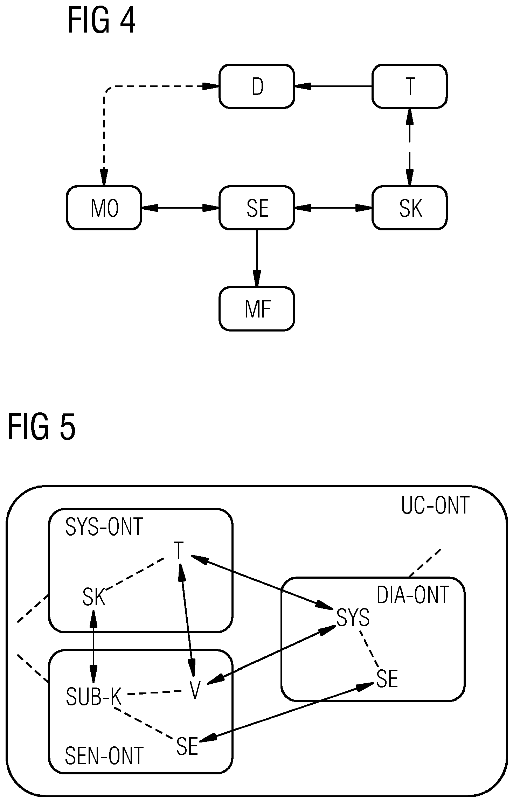

Fig. 4 zeigt schematisch auf hoher Ebene eine bei dem erfindungsgemäßen Verfahren einsetzbare Ontologie. Eine Turbine T als industrielles System besteht aus Systemkomponenten SK. Sensoreinheiten SE sind an Systemkomponenten SK montiert und besitzen Messfähigkeiten MF. Die Sensoreinheiten SE liefern Observationen bzw. Messbeobachtungen MO, die durch eine Diagnoseeinheit D der Turbine T diagnostiziert bzw. ausgewertet werden können.

Fig. 5 zeigt beispielhaft die Integration verschiedener Ontologie zu einer Gesamtontologie des jeweiligen Anwendungsfalls. Der Anwendungsfall bzw. Use Case UC umfasst mehrere miteinander integrierte Ontologien, insbesondere eine Systemontologie SYS-ONT eines technischen Systems, beispielsweise einer Turbine T, die aus Systemkomponenten SK besteht, die ihrerseits aus Subkomponenten SUB-K bestehen, eine Sensorontologie SEN-ONT einer Vorrichtung V mit Sensoreinheiten SE, die ihrerseits aus Subkomponenten SUB-K bestehen, und eine Diagnoseontologie DIA-ONT, welche die Systemontologie SYS-ONT und die Sensorontologie SEN-ONT erweitert. Äquivalente Klassen zwischen den verschiedenen Ontologien sind in Fig. 5 mit einem durchgezogenen Doppelpfeil dargestellt. Objekteigenschaften sind gestrichelt dargestellt. Die integrierte Anwendungsfallontologie UC-ONT besteht bei dem in Fig. 5 dargestellten Beispiel aus drei miteinander verknüpften Ontologiemodulen. Die Anzahl der verknüpften Ontologien kann je nach Anwendungsfall variieren. Die verwendeten Ontologien können in unterschiedlichen Ontologiesprachen implementiert sein. Bei einer möglichen Ausführungsform werden die Ontologien in der Ontologiesprache OWL 2 QL implementiert.

Bei einer möglichen Ausführungsform des erfindungsgemäßen Verfahrens werden mithilfe der Ontologien Sensoreinheiten SE zu Sensorclustern gruppiert.

Im Folgenden wird eine Berechnungsvorschrift zur Identifikation von Sensorclustern in Meta Language angegeben:

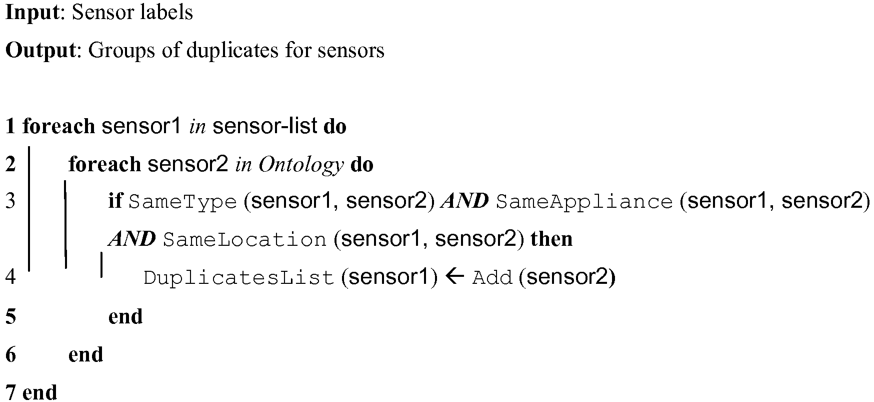

Die Sensordaten werden statistisch analysiert. Im Folgenden wird ein möglicher Algorithmus in Metaschreibweise angegeben:

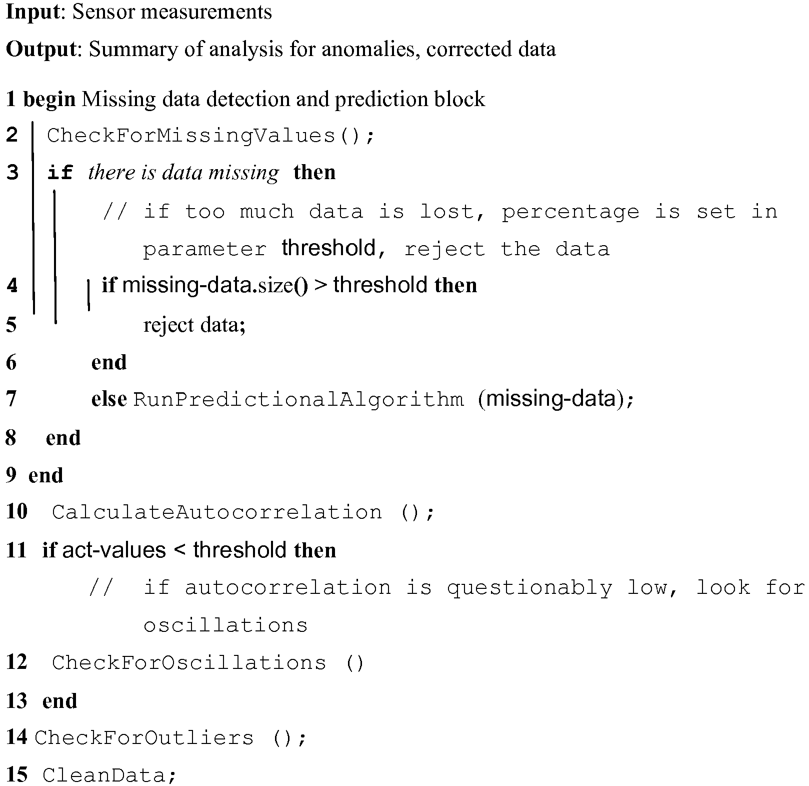

Auf Basis der Sensorclusterinformationen können Sensordaten aufbereitet werden. Ein möglicher Algorithmus zur Integrierung von Sensorclusterinformationen ist im Folgenden in Metaschreibweise angegeben:

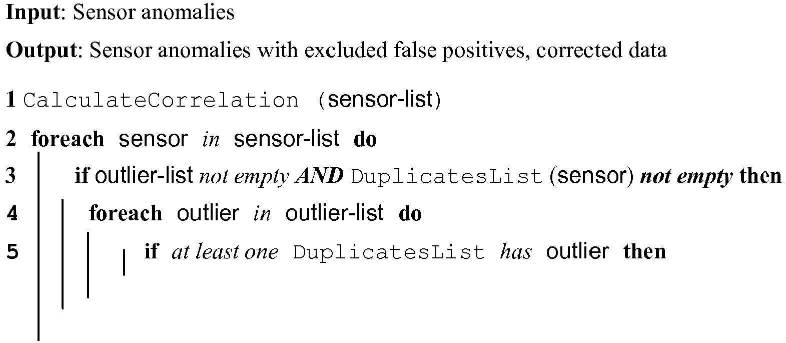

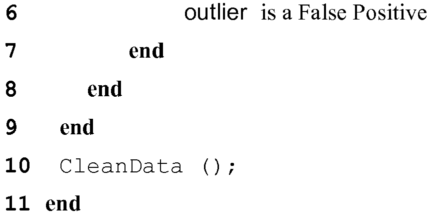

Bei dem erfindungsgemäßen Verfahren werden statistische Datenanalysemethoden und Domaininformationen, die sich in einem formalen Modell, insbesondere in einer Ontologie ONT, ausdrücken, kombiniert, um eine integrierte Datenqualitätseinschätzung der empfangenen Sensordaten und deren Aufbereitung zu zuverlässigen Sensordaten mit erhöhter Datenqualität zu schaffen. Bei einer möglichen Ausführungsform werden Zeitreihenanalyseverfahren, beispielsweise das ARIMA-Modell und Kalman-Filter, eingesetzt. Das erfindungsgemäße Verfahren eignet sich für unterschiedliche technische Systeme, die durch eine Vielzahl von Sensoreinheiten SE überwacht werden. Das erfindungsgemäße Verfahren steigert die Qualität der von den Sensoreinheiten SE gelieferten Sensordaten beträchtlich, sodass die Ausfallwahrscheinlichkeit, dass das überwachte System 1 ausfällt, spürbar verringert wird. Darüber hinaus ist das erfindungsgemäße Verfahren einfach an Veränderungen des zu überwachenden industriellen Systems 1 anpassbar. Wird beispielsweise eine industrielle Anlage in ihrer Zusammensetzung verändert, wird diesem in einfacher Weise Rechnung getragen, indem man die zugehörige Systemontologie SYS-ONT des Systems 1 entsprechend anpasst. Daher ist das erfindungsgemäße Verfahren flexibel gegenüber Veränderungen des zu überwachenden industriellen Systems 1. Darüber hinaus berücksichtigt das erfindungsgemäße Verfahren, ob es sich bei den Sensoreinheiten SE selbst um technische Einrichtungen handelt, die aus Subkomponenten bestehen. Mithilfe der Systemontologie SYS-ONT und der Sensorontologie SEN-ONT ist es zudem möglich, Beziehungen zwischen den Sensoreinheiten, insbesondere ihre räumliche Beziehung innerhalb des technischen Systems, zu berücksichtigen. Die Sensorontologie SEN-ONT kann die Sensoreinheiten SE in verschiedene Sensorklassen klassifizieren.

Die Systemontologie SYS-ONT beschreibt die interne Struktur des industriellen Systems 1 und kann beispielsweise alle Systemkomponenten, Teile, Funktionseinheiten und deren Hierarchie angeben. Die Sensorontologie SEN-ONT kann verschiedene Typen von Messeinheiten bzw. Sensoreinheiten, die das industrielle System 1 überwachen, kategorisieren. Beispielsweise kann eine Hauptklasse alle Typen von Messeinheiten bzw. Sensoreinheiten, die an dem zu überwachenden System 1 montiert sind, auflisten. Beschreibungen der Sensorontologie können verschiedene Klassen von Sensoreinheiten betreffen und weitere charakteristische Informationen zu diesen Sensoreinheiten liefern. Beispielsweise kann ein Temperatursensor verschiedene Messgrößen überwachen, wie beispielsweise die Brennertemperatur, die Einlasstemperatur oder die Kompressor-Ausgangstemperatur. Indem man den Ort der Sensoreinheit, dessen Typ sowie Sensorcharakteristika oder Messeigenschaften oder sonstige Informationen von der Sensorontologie SEN-ONT verwendet, kann man vergleichbare bzw. Ersatzsensoreinheiten identifizieren. Zudem kann man Sensoreinheiten anhand von Sensormerkmalen oder Kriterien zu Sensorclustern gruppieren. Mithilfe des erfindungsgemäßen Verfahrens ist es möglich, Sensorrohdaten SRD aufzubereiten, sodass Sensordaten mit hoher Zuverlässigkeit bzw. höherer Qualität erzeugt werden. Ferner können fehlerhafte Sensordaten herausgefiltert werden bzw. fehlende Sensordaten erkannt werden. Darüber hinaus können verrauschte Sensordaten bzw. oszillierende Sensordaten bereinigt werden.

## Patentansprüche

1. Verfahren zum Bereitstellen von zuverlässigen Sensordaten eines Systems (1) mit den folgenden Schritten:
(a) Empfangen (S1) von Sensordaten von mindestens einer Sensoreinheit, die eine Systemkomponente des Systems (1) überwacht; und
(b) Verarbeiten (S2) der empfangenen Sensordaten unter Verwendung mindestens einer gespeicherten Ontologie und eines statistischen Datenanalysemodells zum Erzeugen der zuverlässigen Sensordaten,
(c) wobei die Ontologie eine Systemontologie (SYS-ONT) des Systems (1) und/oder eine Sensorontologie (SEN-ONT) der Sensoreinheiten aufweist,
**dadurch gekennzeichnet, dass**
auf Basis der Systemontologie (SYS-ONT) und/oder der Sensorontologie (SEN-ONT) des Systems (1) verschiedene Sensoreinheiten, insbesondere innerhalb des Systems (1) benachbarte und/oder einander ähnliche Sensoreinheiten, zu einem Sensorcluster gruppiert werden, und die Sensordaten, die von Sensoreinheiten des gleichen Sensorclusters empfangen werden, mittels des statistischen Datenanalysemodells zum Ermitteln von Korrelationen zwischen den Sensordaten der Sensoreinheiten des Sensorclusters ausgewertet werden,
wobei die zuverlässigen Sensordaten innerhalb eines definierten Bereichs liegen und wobei auf Basis der ermittelten Korrelationen zwischen Sensordaten der verschiedenen Sensoreinheiten des gleichen Sensorclusters unzuverlässige Sensoreinheiten innerhalb des Sensorclusters erkannt und deren Sensordaten zumindest teilweise herausgefiltert werden.

2. Verfahren nach Anspruch 1, wobei die Sensoreinheiten jeweils stationäre und/oder nicht stationäre Zeitreihendaten liefern.

3. Verfahren nach einem der vorangehenden Ansprüche 1 und 2, wobei die Systemontologie (SYS-ONT) eine innere hierarchische Struktur der in dem System (1) enthaltenen Systemkomponenten angibt.

4. Verfahren nach einem der vorangehenden Ansprüche 1 bis 3, wobei die Sensorontologie (SEN-ONT) die Sensoreinheiten in verschiedene Sensorklassen klassifiziert.

5. Verfahren nach einem der vorangehenden Ansprüche 1 bis 4, wobei die Sensoreinheiten Systemkomponenten des Systems (1) bilden und/oder durch externe Sensoreinheiten gebildet werden, die Systemkomponenten des Systems (1) von außen überwachen.

6. Verfahren nach einem der vorangehenden Ansprüche 1 bis 5, wobei die von den Sensoreinheiten empfangenen Sensordaten zusätzlich unter Verwendung einer Diagnoseontologie (DIA-ONT) zum Erzeugen der zuverlässigen Sensordaten verarbeitet werden.

7. Verfahren nach Anspruch 6, wobei die Systemontologie (SYS-ONT) des Systems (1), die Sensorontologie (SEN-ONT) der Sensoreinheiten und die Diagnoseontologie (DIA-ONT) zu einer integrierten Ontologie (UC-ONT) verknüpft werden.

8. Verfahren nach einem der vorangehenden Ansprüche 1 bis 7, wobei das statistische Datenanalysemodell durch ein univariates oder multivariates Datenanalysemodell gebildet wird.

9. System (1) mit einer Vielzahl von Systemkomponenten, die durch Sensoreinheiten (SE) überwacht werden, welche Sensordaten liefern, und einer Datenverarbeitungseinheit,
welche die empfangenen Sensordaten unter Verwendung mindestens einer gespeicherten Ontologie (ONT) und eines statistischen Datenanalysemodells zur Erzeugung von zuverlässigen Sensordaten (ZSD) verarbeitet,
(c) wobei die Ontologie eine Systemontologie (SYS-ONT) des Systems (1) und/ oder eine Sensorontologie (SEN-ONT) der Sensoreinheiten aufweist,
**dadurch gekennzeichnet, dass** die Datenverarbeitungseinheit auf Basis der Systemontologie (SYS-ONT) und/oder der Sensorontologie (SEN-ONT) des Systems (1) verschiedene Sensoreinheiten, insbesondere innerhalb des Systems (1) benachbarte und/oder einander ähnliche Sensoreinheiten, zu einem Sensorcluster gruppiert, und die Datenverarbeitungseinheit die Sensordaten, die von Sensoreinheiten des gleichen Sensorclusters empfangen werden, mittels des statistischen Datenanalysemodells zum Ermitteln von Korrelationen zwischen den Sensordaten der Sensoreinheiten des Sensorclusters auswertet,
wobei die zuverlässigen Sensordaten innerhalb eines definierten Bereichs liegen und wobei auf Basis der ermittelten Korrelationen zwischen Sensordaten der verschiedenen Sensoreinheiten des gleichen Sensorclusters unzuverlässige Sensoreinheiten innerhalb des Sensorclusters erkannt und deren Sensordaten zumindest teilweise herausgefiltert werden.

10. System nach Anspruch 9, wobei das System (1) eine Maschine, insbesondere eine Turbine, mit einer Vielzahl von Maschinenkomponenten ist.

## Claims

1. Method for providing reliable sensor data relating to a system (1), having the following steps of:
(a) receiving (S1) sensor data from at least one sensor unit which monitors a system component of the system (1); and
(b) processing (S2) the received sensor data using at least one stored ontology and a statistical data analysis model in order to generate the reliable sensor data,
(c) the ontology having a system ontology (SYS-ONT) of the system (1) and/or a sensor ontology (SEN-ONT) of the sensor units,
**characterized in that**
various sensor units, in particular sensor units which are adjacent and/or similar to one another inside the system (1), are grouped to form a sensor cluster on the basis of the system ontology (SYS-ONT) and/or the sensor ontology (SEN-ONT) of the system (1), and the sensor data received from sensor units in the same sensor cluster are evaluated by means of the statistical data analysis model in order to determine correlations between the sensor data from the sensor units in the sensor cluster,
the reliable sensor data being within a defined range and unreliable sensor units inside the sensor cluster being detected on the basis of the determined correlations between sensor data from the various sensor units in the same sensor cluster and their sensor data being at least partially filtered out.

2. Method according to Claim 1,
the sensor units each providing stationary and/or non-stationary time series data.

3. Method according to either of the preceding Claims 1 and 2,
the system ontology (SYS-ONT) indicating an internal hierarchical structure of the system components contained in the system (1).

4. Method according to one of the preceding Claims 1 to 3,
the sensor ontology (SEN-ONT) classifying the sensor units in different sensor classes.

5. Method according to one of the preceding Claims 1 to 4,
the sensor units forming system components of the system (1) and/or being formed by external sensor units which monitor system components of the system (1) from the outside.

6. Method according to one of the preceding Claims 1 to 5,
the sensor data received from the sensor units additionally being processed using a diagnosis ontology (DIA-ONT) in order to generate the reliable sensor data.

7. Method according to Claim 6,
the system ontology (SYS-ONT) of the system (1), the sensor ontology (SEN-ONT) of the sensor units and the diagnosis ontology (DIA-ONT) being linked to form an integrated ontology (UC-ONT).

8. Method according to one of the preceding Claims 1 to 7,
the statistical data analysis model
being formed by a univariate or multivariate data analysis model.

9. System (1) having a multiplicity of system components which are monitored by sensor units (SE) which provide sensor data, and a data processing unit which processes the received sensor data using at least one stored ontology (ONT) and a statistical data analysis model in order to generate reliable sensor data (ZSD),
(c) the ontology having a system ontology (SYS-ONT) of the system (1) and/or a sensor ontology (SEN-ONT) of the sensor units,
**characterised in that**
the data processing unit groups various sensor units, in particular sensor units which are adjacent and/or similar to one another inside the system (1), to form a sensor cluster on the basis of the system ontology (SYS-ONT) and/or the sensor ontology (SEN-ONT) of the system (1), and the data processing unit evaluates the sensor data received from sensor units in the same sensor cluster by means of the statistical data analysis model in order to determine correlations between the sensor data from the sensor units in the sensor cluster,
the reliable sensor data being within a defined range and unreliable sensor units inside the sensor cluster being detected on the basis of the determined correlations between sensor data from the various sensor units in the same sensor cluster and their sensor data being at least partially filtered out.

10. System according to Claim 9,
the system (1) being a machine, in particular a turbine, having a multiplicity of machine components.

## Revendications

1. Procédé de mise à disposition de données de détection fiables d'un système (1), comportant les étapes suivantes :
(a) réception (S1) de données de détection d'au moins une unité de détection qui surveille un composant système du système (1) et
(b) traitement (S2) des données de détection reçues en utilisant au moins une ontologie sauvegardée et un modèle statistique d'analyse de données pour générer les données de détection fiables,
(c) l'ontologie comportant une ontologie de système (SYS-ONT) du système (1) et/ou une ontologie de détection (SEN-ONT) de l'unité de détection,
**caractérisé en ce que**,
sur la base de l'ontologie de système (SYS-ONT) et/ou de l'ontologie de détection (SEN-ONT) du système (1), différentes unités de détection, et plus particulièrement des unités de détection voisines et/ou similaires entre elles dans le système (1) sont regroupées pour former un cluster de détection et les données de détection reçues d'unités de détection du même cluster de détection sont évaluées au moyen du modèle statistique d'analyse de données pour déterminer des corrélations entre les données de détection des unités de détection du cluster de détection,
les données de détection fiables se trouvant dans une zone définie et
des unités de détection non fiables étant, dans le cluster de détection, identifiées sur la base des corrélations déterminées entre des données de détection des différentes unités de détection du même cluster de détection et leurs données de détection étant filtrées au moins partiellement.

2. Procédé selon la revendication 1, les unités de détection fournissant respectivement des données chronologiques stationnaires et/ou non stationnaires.

3. Procédé selon l'une des revendications précédentes 1 et 2, l'ontologie de système (SYS-ONT) indiquant une structure hiérarchique interne des composants système contenus dans le système (1).

4. Procédé selon l'une des revendications précédentes 1 à 3, l'ontologie de détection (SEN-ONT) classant les unités de détection en différentes classes de détection.

5. Procédé selon l'une des revendications précédentes 1 à 4, les unités de détection formant des composants système du système (1) et/ou étant formées par des unités de détection externes qui surveillent des composants système du système (1) depuis l'extérieur.

6. Procédé selon l'une des revendications précédentes 1 à 5, les données de détection reçues par les unités de détection étant traitées additionnellement en utilisant une ontologie de diagnostic (DIA-ONT) pour générer les données de détection fiables.

7. Procédé selon la revendication 6, l'ontologie de système (SYS-ONT) du système (1), l'ontologie de détection (SEN-ONT) des unités de détection et l'ontologie de diagnostic (DIA-ONT) étant associées pour constituer une ontologie intégrée (UC-ONT).

8. Procédé selon l'une des revendications précédentes 1 à 7, le modèle statistique d'analyse de données étant formé par un modèle d'analyse de données univariant ou multivariant.

9. Système (1) comportant une pluralité de composants système surveillés par des unités de détection (SE) qui fournissent des données de détection et une unité de traitement de données qui traite les données de détection reçues en utilisant au moins une ontologie sauvegardée (ONT) et un modèle statistique d'analyse de données pour générer des données de détection fiables (ZSD),
(c) l'ontologie comportant une ontologie de système (SYS-ONT) du système (1) et/ou une ontologie de détection (SEN-ONT) des unités de détection,
**caractérisé en ce que**
l'unité de traitement de données, sur la base de l'ontologie de système (SYS-ONT) et/ou de l'ontologie de détection (SEN-ONT) du système (1), regroupe différentes unités de détection, et plus particulièrement des unités de détection voisines et/ou similaires entre elles dans le système (1), pour former un cluster de détection et l'unité de traitement de données évalue les données de détection reçues d'unités de détection du même cluster de détection au moyen du modèle statistique d'analyse de données pour déterminer des corrélations entre les données de détection des unités de détection du cluster de détection,
les données de détection fiables se trouvant dans une zone définie et
des unités de détection non fiables étant, dans le cluster de détection, identifiées sur la base des corrélations déterminées entre des données de détection des différentes unités de détection du même cluster de détection et leurs données de détection étant filtrées au moins partiellement.

10. Système selon la revendication 9, le système (1) étant une machine, et plus particulièrement une turbine, comportant une pluralité de composants machine.
